# EUROPÄISCHE PATENTSCHRIFT

(11) **EP 3 164 681 B1**
(45) Veröffentlichungstag und Bekanntmachung des Hinweises auf die Patenterteilung: **05.12.2018**
(21) Anmeldenummer: 16712795.0
(22) Anmeldetag: 22.03.2016
(51) Int. Cl.: G01F 11/28

(54) **HYDROSTATISCHES DOSIERSYSTEM UND VERFAHREN ZUR DOSIERUNG VON FLUIDEN UNTER VERWENDUNG EINES DERARTIGEN DOSIERSYSTEMS**
HYDROSTATIC DOSING SYSTEM AND METHOD FOR DOSING FLUIDS USING SUCH A DOSING SYSTEM
SYSTÈME DE DOSAGE HYDROSTATIQUE ET PROCÉDÉ DE DOSAGE DE FLUIDES UTILISANT UN TEL SYSTÈME DE DOSAGE

(30) Priorität: 23.03.2015 DE 102015003568
(43) Veröffentlichungstag der Anmeldung: 10.05.2017
(73) Patentinhaber: Hans-Jürgen Keil Anlagenbau GmbH & Co. KG, 49163 Bohmte-Hunteburg (DE)
(72) Erfinder: MÖNKEDIECK, Jürgen, 32369 Rahden-Sielhorst (DE)
(74) Vertreter: Flügel Preissner Schober Seidel
(86) Internationale Anmeldenummer: PCT/EP2016/056279
(87) Internationale Veröffentlichungsnummer: WO 2016/150976

(56) Entgegenhaltungen:
- EP-A1- 0 660 091
- EP-A2- 1 150 105
- EP-A2- 2 823 884
- DE-A1- 3 630 078
- DE-A1- 10 334 857
- FR-A1- 2 767 206
- US-A- 4 597 507
- US-A- 5 556 002

## Beschreibung

Die vorliegende Erfindung betrifft ein hydrostatisches Dosiersystem, insbesondere zur Dosierung von Fluiden in Mischanlagen. Weiter betrifft die vorliegende Erfindung ein Verfahren zur Dosierung von Fluiden unter Verwendung eines derartigen Dosiersystems.

Dosiersysteme finden insbesondere für sogenannte Batch-Dosierprozesse in der chemischen Industrie Anwendung, die vor allem zur Herstellung von Kunststoffen oder Farben und Lacken, aber auch in der Lebensmittel- und der Pharmatechnologie angewandt werden. Zur exakten Abstimmung der einzelnen Rezepturkomponenten ist daher eine möglichst genaue Dosierung der Fluide notwendig. Aus verfahrenstechnischer und prozessökonomischer Sicht ist es ferner sinnvoll, mehrere Rezepturkomponenten gleichzeitig dosieren zu können.

Aus der DE 10 2009 014 363 A1 ist eine Anlage zur taktweisen Herstellung eines Harz-Füllstoffgemischs bekannt. Die Anlage weist zur gravimetrischen Dosierung eine mit einem Mischtopf verbundene Wiegevorrichtung und eine Steuervorrichtung auf. Während des Dosiervorgangs wird die Dosiermenge mittels der Wiegevorrichtung überwacht. Die Steuervorrichtung beendet die Dosierung, sobald die gewünschte Dosiermenge erreicht ist.

US 4,597,507 offenbart eine Vorrichtung zum Dosieren und Zuführen einer Lösung. Die Vorrichtung umfasst einen Behälter, ein Einlassventil zum Zuführen einer Lösung in einen solchen Behälter und ein Auslassventil, um es zu ermöglichen, dass die Lösung im Behälter, aus dem Behälter herausfließen kann. Eine Kammer im unteren Teil des Behälters schließt Luft während des Befüllens des Behälters bei einem Druck, der dem hydrostatischen Druck der Lösung im Behälter entspricht, ein. Ein Druckwandler, der mit der Kammer verbunden ist, liefert ein Ausgangssignal proportional zu dem Volumen der Lösung in dem Behälter. Eine Steuereinrichtung, die auf das Ausgangssignal des Wandlers anspricht, schließt das Einlassventil, wenn das vorbestimmte Volumen der Lösung erreicht ist.

DE 36 30 078 A1 offenbart eine Vorrichtung und ein Verfahren zur Transformation von Gasen durch die kontrollierte Variation von Gasmengen.

US 5,556,002 offenbart ein Abgabesystem, welches ein Großreservoir, das eine Volumenmenge eines flüssigen Materials und einen Messbehälter, der mit dem Großreservoir verbunden ist, enthält. Ein Drucksensor, mit einen Druckkopf zum Abgreifens des Drucks, der sich Messbehälter entwickelt, ist innerhalb des Messbehälters enthalten.

EP 1 150 105 A2 offenbart ein Gaspolster-Mikrodosiersystem zum Dosieren von Flüssigkeitsvolumina im Mikroliter- und Submikroliterbereich mit einem Flüssigkeitsreservoir, mit einem Speicherraum für die zu dosierende Flüssigkeit, dessen Begrenzung von einem nach außen führenden Flüssigkeitsdurchgang und einem Gasdurchgang durchbrochen ist, mit einem Gasverdrängungssystem mit einer Mikropumpe zum Pumpen eines Gases und einer Verbindung mit dem Gasdurchgang und einer mit der Mikropumpe in Wirkverbindung stehenden Dosiersteuerung zum Erzeugen eines Unterdruckes oder Überdruckes durch Betätigen der Mikropumpe und zum Beaufschlagen des Flüssigkeitsreservoirs mit dem Unterdruck oder Überdruck, um Flüssigkeit durch den Flüssigkeitsdurchgang in den Speicherraum aufzunehmen oder aus diesem abzugeben.

DE 103 34 857 A1 offenbart ein Dosiersystem mit Differenzdruckmessung. Das Dosiersystem weist ein Dosiergefäß auf, das als einteiliges Gefäß ausgebildet ist. An dem Dosiergefäß sind zwei Drucksensoren angeordnet, über welche eine Druckdifferenz gemessen werden kann, über die wiederum die Flüssigkeitsmenge in dem Dosiergefäß bestimmt werden kann.

Aufgabe der vorliegenden Erfindung ist es, Dosiersysteme der bekannten Art hinsichtlich der Dosiergenauigkeit und der simultanen Dosierungen mehrerer Komponenten zu verbessern.

Zur Lösung dieser Aufgabe wird ein hydrostatisches Dosiersystem mit den Merkmalen des Anspruchs 1 sowie ein Verfahren zur Dosierung von Fluiden nach Anspruch 10 vorgeschlagen. Vorteilhafte Ausgestaltungen sind Gegenstand der jeweiligen Unteransprüche.

Das erfindungsgemäße Dosiersystem umfasst wenigstens ein Messrohr, einen Drucksensor, der an einem Fußteil des Messrohrs angeordnet ist, ein Einlassventil, über das das Fluid dem Messrohr zugeführt werden kann, und ein Dosierventil, über das das Fluid aus dem Messrohr abgeführt werden kann. Der in dem Fußteil angeordnete Drucksensor misst den auf ihm lastenden hydrostatischen Druck der Fluidsäule in dem Messrohr. Der so gemessene hydrostatische Druck ist proportional zu der Masse des Fluids, sodass eine Umrechnung über die Dichte, wie sie beispielsweise bei volumetrischen Messverfahren erforderlich ist, mit den damit verbundenen Messfehlern entfällt. Ferner sind derartige Messrohre weitgehend unempfindlich gegen Vibrationen und Erschütterungen und stellen eine einfache und kostengünstige Lösung dar.

Das Fluid wird vor der Dosierung dem Messrohr zugeführt und während der Dosierung über das Dosierventil aus dem Messrohr abgeführt. Insbesondere kann es je nach Anwendung vorteilhaft sein, mehrere Messrohre in dem Dosiersystem vorzusehen, um mehrere Komponenten simultan dosieren zu können.

Das Messrohr kann ferner mit einem Doppelmantel versehen und an ein Heiz- oder Kühlsystem angeschlossen werden, sofern dies aus verfahrenstechnischer Sicht oder zur Verbesserung der Fließeigenschaften erforderlich ist. Bei geforderter Beheizung ist alternativ eine Ausrüstung mit elektrischen Heizsystemen möglich.

Das Messrohr weist ein Kopfteil mit einem Drucksensor auf. Dies ist insbesondere bei Anwendungen vorteilhaft, bei denen das Dosiermedium zum Beispiel zur Inertisierung, zum Schutz vor Sauerstoffkontakt oder zur Austragshilfe bei schlechten Fließeigenschaften mit einem Gaspolster überlagert werden muss. Hierdurch kann die Dosiermenge mittels der Druckdifferenz zwischen dem Drucksensor in dem Kopfteil und dem Drucksensor in dem Fußteil ermittelt werden.

Das Kopfteil ist vorzugsweise identisch zu dem Fußteil ausgebildet. Alternativ oder zusätzlich zu dem Drucksensor kann das Kopfteil einen Füllstandssensor zur Vermeidung einer Überfüllung des Messrohrs aufweisen. Allgemein dienen Kopf- und Fußteil insbesondere der Aufnahme von Sensorik, dem Anschluss von Rohrleitungen und dem Anschluss des eigentlichen Messrohrstücks.

Das Messrohr ist als austauschbares Rohrformteil, insbesondere aus Edelstahl, ausgebildet. Dies ermöglicht insbesondere eine optimale Anpassung der Länge des Messrohrs an den Messbereich des Drucksensors in dem Fußteil und des Durchmessers des Messrohrs an die vorgegebene Dosiermenge. Zusätzlich können die austauschbaren Rohrformteile zu Zwecken der Reinigung oder der Anpassung des Dosiersystems leicht entfernt und wieder angebracht werden. Bei kritischen Fluideigenschaften kann das Messrohr alternativ aus anderen fluidresistenten Materialien wie Kunststoff, Glas, innenbeschichteten Stahlrohrelementen oder Stahlrohrelementen mit erhöhter Oberflächengüte ausgebildet sein.

Vorteilhaft ist das Dosierventil als zweistufiges Ventil ausgebildet. Ein solches zweistufiges Ventil kann zwischen Grobstrom- und Feinstromdosierung umgeschaltet werden. Dadurch kann während des Dosiervorgangs die Dosiergeschwindigkeit optimal an den aktuellen Zustand angepasst werden, indem bis zum Erreichen eines vordefinierten Umschaltpunkts, beispielsweise 95 % der Dosiermenge, eine Grobstromdosierung mit hohem Massestrom durchgeführt wird, um die Dosierzeiten zu verkürzen. Bei Erreichen des vordefinierten Umschaltpunkts wird das zweistufige Ventil sodann umgeschaltet, sodass eine Feinstromdosierung durchgeführt wird, mittels der weitaus exakter dosiert werden kann.

Das Einlassventil ist in einer vorteilhaften Ausgestaltung mit einer Befüllungsleitung verbunden. Die Befüllungsleitung dient einer einfacheren Befüllung des Messrohrs aus Transportgebinden oder Lagertanks. Das Einlassventil wird zur Befüllung des Messrohrs geöffnet, und es wird geschlossen, sobald die gewünschte Füllmenge in dem Messrohr vorhanden ist. Die Befüllung des Messrohrs erfolgt vorzugsweise von unten, um diese möglichst gleichmäßig und spritzarm umzusetzen.

In einer vorteilhaften Ausgestaltung ist die Befüllungsleitung an einen in Vertikalrichtung oberhalb des wenigstens einen Messrohrs angeordneten Pufferbehälter angeschlossen. Der Pufferbehälter dient der kontinuierlichen Dosierbereitschaft, wodurch die Prozesse weiter vereinfacht und automatisiert werden können.

Vorteilhaft ist das Dosierventil in einer Auslassleitung angeordnet, die mit dem Fußteil verbunden ist. Das Fluid kann während der Dosierung so über die Auslassleitung ausgelassen werden.

Die Auslassleitung weist in einer vorteilhaften Ausgestaltung ein Umschaltventil zur Probeentnahme auf. Somit kann die korrekte Funktion der Dosierung überprüft werden, was insbesondere bei Inbetriebnahme oder Wartung erforderlich sein kann.

Vorteilhaft weist das hydrostatische Dosiersystem eine Abluftleitung auf, über die verdrängte Luft entweichen kann. Die Luft kann beispielsweise in die Umgebung oder in ein Abgasnetz abgeführt werden. Gleichsam dient die Abluftleitung auch dem Nachströmen von Luft während des Dosiervorgangs. Schließlich kann das Abluftsystem an ein peripheres Vakuumsystem angeschlossen werden, mittels dem das Fluid während des Befüllungsvorgangs in das Messrohr gesaugt werden kann.

Das abluftseitige Rohrsystem kann vorzugsweise mit automatischen Ventilen versehen werden, durch die mittels einer Anlagensteuerung die Be- und Entlüftung des Dosiersystems gesteuert werden kann.

In einer vorteilhaften Ausgestaltung ist das wenigstens eine Messrohr vertikal ausgerichtet, wodurch der Dosierprozess und die exakte Messung des hydrostatischen Drucks verbessert werden.

Vorteilhaft weist das hydrostatische Dosiersystem eine Teilanlage, insbesondere einen Mischbehälter, auf, wobei die Teilanlage in Vertikalrichtung unterhalb des wenigstens einen Messrohrs angeordnet ist. Das dosierte Fluid kann dadurch direkt in die Teilanlage entweichen.

Das hydrostatische Dosiersystem kann ferner an ein peripheres Spülsystem angeschlossen sein, wenn eine regelmäßige Reinigung erwünscht oder aus Hygienegründen erforderlich ist.

Ein erfindungsgemäßes Verfahren zur Dosierung von Fluiden unter Verwendung des erfindungsgemäßen Dosiersystems umfasst die folgenden Verfahrensschritte:
a) Befüllen eines Messrohrs mittels des Einlassventils;
b) Schließen des Einlassventils, wenn das Messrohr befüllt ist;
c) Öffnen des Dosierventils unter kontinuierlicher Messung des Füllstands mittels des ersten und zweiten Drucksensors;
d) Schließen des Dosierventils, sobald der erste und zweite Drucksensor eine gewünschte Flüssigkeitsmenge melden.

Das Befüllen des Messrohrs erfolgt üblicherweise derart, dass es vollständig mit Fluid gefüllt wird. Sodann wird das Einlassventil geschlossen, um eine Überfüllung zu vermeiden. Die Kontrolle des Füllstands wird in der Regel über den hydrostatischen Drucksensor im Fußteil des Messrohrs gewährleistet. Alternativ hierzu kann jedoch auch im Kopfteil des Messrohrs ein Füllstandssensor vorgesehen sein. Während der Dosierung überwacht der Drucksensor den Stand der Fluidsäule in dem Messrohr und kontrolliert dadurch kontinuierlich die Dosiermenge. Sobald die gewünschte Dosiermenge erreicht ist, wird das Dosierventil geschlossen und somit der Dosiervorgang beendet.

Vorteilhaft wird das Dosierventil in Schritt (c) in Grobstromdosierung geöffnet und bei Erreichen eines vordefinierten Schaltpunkts in Feinstromdosierung umgeschaltet. Dadurch kann während des Dosiervorgangs durch das Steuern des Massestroms die Dosiergeschwindigkeit optimal an den aktuellen Zustand angepasst werden, sodass die Dosierung in möglichst kurzer Zeit, aber dennoch auch möglichst genau erfolgen kann.

Vorteilhaft erfolgt das Befüllen des Messrohrs in Schritt (a) über die Befüllungsleitung.

Das beschriebene Verfahren zur Dosierung von Fluiden unter Verwendung des Dosiersystems kann insbesondere durch eine Anlagensteuerung vollautomatisch durchgeführt werden. Dies ermöglicht auch eine hohen Automatisierungsgrad und eine präzise und schnelle Abhandlung der Verfahrensschritte, wodurch das System in verfahrenstechnischen Anlagen von industriellem Maßstab verwendet werden kann.

Nachfolgend wird die Erfindung anhand eines Ausführungsbeispiels näher erläutert, das in den Zeichnungen schematisch dargestellt ist. Darin zeigt:

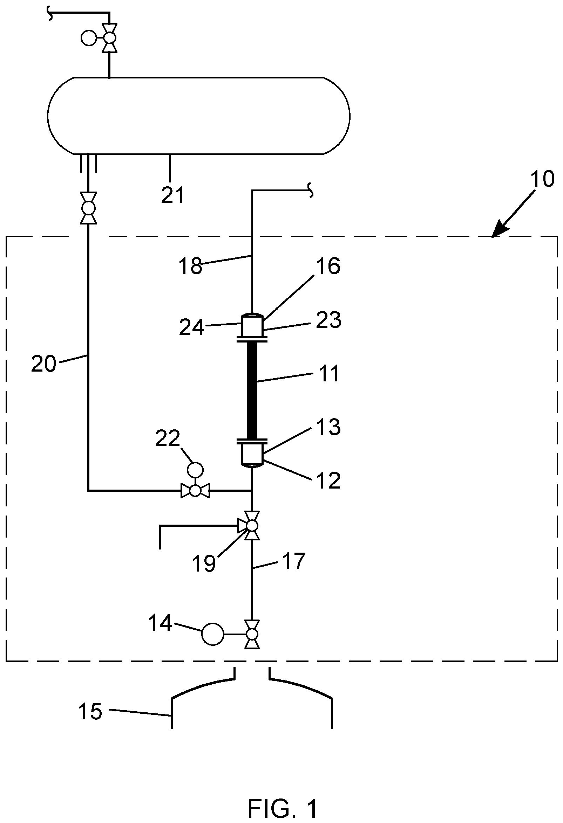

- Fig. 1: ein hydrostatisches Dosiersystem gemäß einem Ausführungsbeispiel.

Das in Fig. 1 schematisch dargestellte hydrostatische Dosiersystem 10 umfasst ein Messrohr 11 mit einem Fußteil 12 und einem Kopfteil 16. An dem Fußteil 12 ist ein hydrostatischer Drucksensor 13 angeordnet. Das Messrohr 11 ist als austauschbares Rohrformteil, insbesondere aus Edelstahl, ausgebildet. Hierdurch ist eine optimale Anpassung der Länge des Messrohrs 11 an den Messbereich des Drucksensors 13 in dem Fußteil 12 und des Durchmessers des Messrohrs 11 an die vorgegebene Dosiermenge möglich. Zusätzlich können die austauschbaren Rohrformteile zu Zwecken der Reinigung oder der Anpassung des Dosiersystems leicht entfernt und wieder angebracht werden. Bei kritischen Fluideigenschaften kann das Messrohr 11 alternativ aus Kunststoff, innenbeschichteten Stahlrohrelementen oder Stahlrohrelementen mit erhöhter Oberflächengüte ausgebildet sein.

Ferner ist an das Fußteil eine Auslassleitung 17 angeschlossen. Die Auslassleitung 17 weist ein Dosierventil 14, über das das Fluid aus dem Messrohr 11 abgeführt werden kann, und ein Umschaltventil 19 zur Entnahme von Dosierproben aus der Auslassleitung 17 auf. Unterhalb des Messrohrs 11 und der Auslassleitung 17 mit dem Dosierventil 14 ist eine Teilanlage 15 angeordnet, in die das Fluid ausgelassen wird.

Eine Befüllungsleitung 20 mit einem Einlassventil 22 ist mit der Auslassleitung 17 verbunden. An ihrem anderen Ende kann die Befüllungsleitung 20 an einen Pufferbehälter 21 angeschlossen sein.

An dem Kopfteil 16 kann, wie in Fig. 1 dargestellt, ein Drucksensor 23 und ein Füllstandssensor 24 angeordnet sein. Ferner ist an dem Kopfteil 16 eine Abluftleitung 18 angeordnet.

Zur Vorbereitung des Dosierungsprozesses wird das zu dosierende Fluid in den Pufferbehälter 21 eingefüllt. Der Pufferbehälter 21 wird üblicherweise derart angeordnet, dass dieser oberhalb des Messrohrs 11 angeordnet ist, um die Befüllung des Messrohrs 11 zu erleichtern. Auf den Pufferbehälter 21 kann alternativ verzichtet werden, jedoch vereinfacht dieser das automatische Nachfüllen des Messrohrs 11 und damit die industrielle Anwendung. Wenn das Einlassventil 22 geöffnet wird, wird das Fluid über die Befüllungsleitung 20 dem Messrohr 11 zugeführt. Bei Erreichen des gewünschten Füllstands in dem Messrohr 11 - üblicherweise wird dieses vollständig gefüllt - wird das Einlassventil 22 geschlossen.

Der Füllstand in dem Messrohr 11 wird von dem hydrostatischen Drucksensor 13 überwacht, das heißt während der Befüllung des Messrohrs 11 und während der Dosierung. Der hydrostatische Druck der Fluidsäule im Messrohr 11 wirkt auf den Drucksensor 13 im Fußteil 12 des Messrohrs 11 und ist direkt proportional zur Masse des Fluids. Somit ist über die Druckmessung eine einfache und zuverlässige Messung der Masse des Fluids möglich, ohne dass eine Dichteumrechnung erforderlich ist oder Schwankungen aufgrund von temperaturbedingter spezifischer Dichte, Gasblasen oder Schaumbildung auftreten.

Die korrekte Befüllung kann zusätzlich durch den im Kopfteil 16 angeordneten Füllstandssensor 24 überwacht werden. Der Drucksensor 23 dient dazu, die Dosiermenge mittels der Druckdifferenz zwischen dem Drucksensor 23 in dem Kopfteil 16 und dem Drucksensor 13 in dem Fußteil 12 zu ermitteln. Auf Drucksensor 23 und Füllstandssensor 24 kann jedoch, je nach Anwendungsfall, verzichtet werden.

Über die mit dem Kopfteil 16 verbundene Abluftleitung 18 kann beim Befüllen des Messrohrs 11 die verdrängte Luft entweichen. Die Luft kann beispielsweise in die Umgebung oder in ein hier nicht dargestelltes Abgasnetz abgeführt werden. Gleichsam dient die Abluftleitung 18 auch dem Nachströmen von Luft während des Dosiervorgangs.

Beim Start des Dosiervorgangs wird das Dosierventil 14 geöffnet, sodass das Fluid aus dem gefüllten Messrohr 11 durch die Auslassleitung 17 in die Teilanlage 15 abgeführt werden kann. Zur schnelleren und trotzdem sehr genauen Dosierung ist das Dosierventil 14 als zweistufiges Ventil ausgebildet, sodass zwischen Grobstrom- und Feinstromdosierung umgeschaltet werden kann. Das Fluid strömt somit zunächst relativ schnell aus dem Messrohr 11 durch das Dosierventil 14 in die Teilanlage 15 und dann, nach dem Umschalten von Grobstromdosierung zu Feinstromdosierung, deutlich langsamer, um die Dosierung exakt zu beenden. Bei Erreichen der gewünschten Dosiermenge wird das Dosierventil 14 geschlossen, sodass kein Fluid mehr aus dem Messrohr 11 entweicht.

Während der Inbetriebnahme der Anlage oder zu Wartungszwecken kann es erforderlich sein, Dosierproben zu entnehmen. Hierzu wird das Ventil 19 geöffnet, um die Dosiermenge aus der Auslassleitung 17 abzuführen.

### Bezugszeichenliste

- 10: Dosiersystem
- 11: Messrohr
- 12: Fußteil
- 13: Drucksensor
- 14: Dosierventil
- 15: Teilanlage
- 16: Kopfteil
- 17: Auslassleitung
- 18: Abluftleitung
- 19: Umschaltventil
- 20: Befüllungsleitung
- 21: Pufferbehälter
- 22: Einlassventil
- 23: Drucksensor
- 24: Füllstandssensor

## Patentansprüche

1. Hydrostatisches Dosiersystem (10), insbesondere zur Dosierung von Fluiden in Mischanlagen, wobei das Dosiersystem (10) wenigstens ein Messrohr (11), einen ersten Drucksensor (13), der an einem Fußteil (12) des Messrohrs (11) angeordnet ist, ein Einlassventil (22), über das das Fluid dem Messrohr (11) zugeführt werden kann, und ein Dosierventil (14), über das das Fluid aus dem Messrohr (11) abgeführt werden kann, umfasst, **dadurch gekennzeichnet, dass** das Messrohr (11) ein Kopfteil (16) mit einem zweiten Drucksensor (23) aufweist, wobei das Messrohr (11) als austauschbares Rohrformteil aus einem fluidresistenten Material ausgebildet ist und wobei das Kopfteil (16) sowie das Fußteil (12) einen Anschluss zum Anschließen des Messrohrs (11) aufweisen.

2. Hydrostatisches Dosiersystem (10) nach Anspruch 1, **dadurch gekennzeichnet, dass** das Messrohr (11) aus Edelstahl, Kunststoff oder Glas ausgebildet ist.

3. Hydrostatisches Dosiersystem (10) nach einem der vorstehenden Ansprüche, **dadurch gekennzeichnet, dass** das Dosierventil (14) als zweistufiges Ventil ausgebildet ist.

4. Hydrostatisches Dosiersystem (10) nach einem der vorstehenden Ansprüche, **dadurch gekennzeichnet, dass** das Einlassventil (22) mit einer Befüllungsleitung (20) verbunden ist.

5. Hydrostatisches Dosiersystem (10) nach Anspruch 4, **dadurch gekennzeichnet, dass** die Befüllungsleitung (20) an einen in Vertikalrichtung oberhalb des wenigstens einen Messrohrs (11) angeordneten Pufferbehälter (21) angeschlossen ist.

6. Hydrostatisches Dosiersystem (10) nach einem der vorstehenden Ansprüche, **dadurch gekennzeichnet, dass** das Dosierventil (14) in einer Auslassleitung (17) angeordnet ist, die mit dem Fußteil (12) verbunden ist.

7. Hydrostatisches Dosiersystem (10) nach Anspruch 6, **dadurch gekennzeichnet, dass** die Auslassleitung (17) ein Umschaltventil (19) zur Probeentnahme aufweist.

8. Hydrostatisches Dosiersystem (10) nach einem der vorstehenden Ansprüche, **gekennzeichnet durch** eine Abluftleitung (18), über die verdrängte Luft entweichen kann.

9. Hydrostatisches Dosiersystem (10) nach einem der vorstehenden Ansprüche, **dadurch gekennzeichnet, dass** das wenigstens eine Messrohr (11) vertikal ausgerichtet ist.

10. Verfahren zur Dosierung von Fluiden unter Verwendung eines Dosiersystems (10) nach einem der vorstehenden Ansprüche, umfassend die folgenden Verfahrensschritte:
a) Befüllen eines Messrohres (11) mittels des Einlassventils (22);
b) Schließen des Einlassventils (22), wenn das Messrohr (11) befüllt ist;
c) Öffnen des Dosierventils (14) unter kontinuierlicher Messung des Füllstands basierend auf einer Messung des hydrostatischen Drucks einer Fluidsäule in dem Messrohr (11) mittels des ersten Drucksensors (13) und des zweiten Drucksensors (23);
d) Schließen des Dosierventils (14), sobald der erste Drucksensor (13) und der zweite Drucksensor (23) einen gewünschten Füllstand melden.

11. Verfahren nach Anspruch 10, **dadurch gekennzeichnet, dass** das Dosierventil (14) in Schritt (c) in Grobstromdosierung geöffnet wird und dass das Dosierventil (14) bei Erreichen eines vordefinierten Schaltpunkts in Feinstromdosierung umgeschaltet wird.

12. Verfahren nach Anspruch 10 oder 11, **dadurch gekennzeichnet, dass** das Befüllen des Messrohrs (11) in Schritt (a) über die Befüllungsleitung (20) erfolgt.

## Claims

1. A hydrostatic metering system (10), in particular for metering fluids in mixing systems, the metering system (10) comprising at least one measuring pipe (11), a first pressure sensor (13), which is arranged on a base part (12) of the measuring pipe (11), an inlet valve (22), via which the fluid can be fed to the measuring pipe (11), and a metering valve (14), via which the fluid can be discharged from the measuring pipe (11), **characterized in that** the measuring pipe (11) has a top part (16) with a second pressure sensor (23), wherein the measuring pipe (11) is configured as a replaceable tubular molded part made of a fluid-resistant material, and wherein the top part (16) and the base part (12) have a connection for connecting the measuring pipe (11).

2. The hydrostatic metering system (10) according to claim 1, **characterized in that** the measuring pipe (11) is formed from stainless steel, plastic or glass.

3. The hydrostatic metering system (10) according to any one of the preceding claims, **characterized in that** the metering valve (14) is configured as a two-stage valve.

4. The hydrostatic metering system (10) according to any one of the preceding claims, **characterized in that** the inlet valve (22) is connected to a filling line (20).

5. The hydrostatic metering system (10) according to claim 4, **characterized in that** the filling line (20) is connected to a buffer vessel (21) disposed above the at least one measuring pipe (11) in the vertical direction.

6. The hydrostatic metering system (10) according to any one of the preceding claims, **characterized in that** the metering valve (14) is disposed in an outlet line (17) connected to the base part (12).

7. The hydrostatic metering system (10) according to claim 6, **characterized in that** the outlet line (17) has a switching valve (19) for taking samples.

8. The hydrostatic metering system (10) according to any one of the preceding claims, **characterized by** an exhaust duct (18) via which the displaced air can escape.

9. The hydrostatic metering system (10) according to any one of the preceding claims, **characterized in that** the at least one measuring pipe (11) is oriented vertically.

10. A method for metering fluids using the hydrostatic metering system (10) according to any one of the preceding claims, comprising the following process steps:
a) filling a measuring pipe (11) by means of the inlet valve (22);
b) closing the inlet valve (22) when the measuring pipe (11) is filled up;
c) opening the metering valve (14) while continuously measuring the filling level based on a measurement of the hydrostatic pressure of a fluid column in the measuring pipe (11) by means of the first pressure sensor (13) and the second pressure sensor (23);
d) closing the metering valve (14) as soon as the first pressure sensor (13) and the second pressure sensor (23) report a desired filling level.

11. The method according to claim 10, **characterized in that** the metering valve (14) is opened in step (c) in coarse flow metering, and that the metering valve (14) is switched to fine flow metering upon reaching a predefined switching point.

12. The method according to claim 10 or 11, **characterized in that** the measuring pipe (11) is filled in step (a) via the filling line (20).

## Revendications

1. Système de dosage hydrostatique (10), en particulier pour le dosage de fluides dans des installations de mélangeage, dans lequel le système de dosage (10) comprend au moins un tube de mesure (11), un premier capteur de pression (13) qui est agencé sur une partie de pied (12) du tube de mesure (11), une vanne d'entrée (22) via laquelle le fluide peut être amené au tube de mesure (11), et une vanne de dosage (14) via laquelle le fluide peut être évacué hors du tube de mesure (11), **caractérisé en ce que** le tube de mesure (11) comprend une partie de tête (16) pourvue d'un second capteur de pression (23), le tube de mesure (11) étant réalisé sous forme de partie moulée de tube interchangeable en un matériau résistant aux fluides, et la partie de tête (16) ainsi que la partie de pied (12) présentent un raccord pour raccorder le tube de mesure (11).

2. Système de dosage hydrostatique (10) selon la revendication 1, **caractérisé en ce que** le tube de mesure (11) est réalisé en acier inoxydable, en matière plastique ou en verre.

3. Système de dosage hydrostatique (10) selon l'une des revendications précédentes, **caractérisé en ce que** la vanne de dosage (14) est réalisée sous forme de vanne à deux étages.

4. Système de dosage hydrostatique (10) selon l'une des revendications précédentes, **caractérisé en ce que** la vanne d'entrée (22) est reliée à une conduite de remplissage (20).

5. Système de dosage hydrostatique (10) selon la revendication 4, **caractérisé en ce que** la conduite de remplissage (20) est raccordée à un récipient tampon (21) agencé au-dessus dudit au moins un tube de mesure (11).

6. Système de dosage hydrostatique (10) selon l'une des revendications précédentes, **caractérisé en ce que** la vanne de dosage (14) est agencée dans une conduite de sortie (17) qui est reliée à la partie de pied (12).

7. Système de dosage hydrostatique (10) selon la revendication 6, **caractérisé en ce que** la conduite de sortie (17) comprend une vanne de commutation (19) pour le prélèvement d'échantillons.

8. Système de dosage hydrostatique (10) selon l'une des revendications précédentes, **caractérisé par** une conduite de sortie d'air (18) permettant à l'air refoulé de s'échapper.

9. Système de dosage hydrostatique (10) selon l'une des revendications précédentes, **caractérisé en ce que** ledit au moins un tube de mesure (11) est orienté verticalement.

10. Procédé pour doser des fluides en utilisant un système de dosage hydrostatique (10) selon l'une des revendications précédentes, comprenant les étapes suivantes consistant à :
a) remplir un tube de mesure (11) à l'aide de la vanne d'entrée (22) ;
b) fermer la vanne d'entrée (22) lorsque le tube de mesure (11) est rempli ;
c) ouvrir la vanne de dosage (14) en mesurant en continu le niveau de remplissage en se basant sur une mesure de la pression hydrostatique d'une colonne de fluide dans le tube de mesure (11) à l'aide du premier capteur de pression (13) et du second capteur de pression (23) ;
d) fermer la vanne de dosage (14) dès que le premier capteur de pression (13) et le second capteur de pression (23) indiquent un niveau de remplissage désiré.

11. Procédé selon la revendication 10, **caractérisé en ce que** dans l'étape (c), la vanne de dosage (14) est ouverte en mode de dosage grossier, et **en ce que** la vanne de dosage (14) est commutée en mode de dosage fin lorsqu'un point de commutation prédéfini est atteint.

12. Procédé selon la revendication 10 ou 11, **caractérisé en ce que** le remplissage du tube de mesure (11) s'effectue par la conduite de remplissage (20) dans l'étape (a).
